Europäisches Patentamt

European Patent Office

Office européen des brevets

(19)

(11) Veröffentlichungsnummer: **0 105 564**
**B1**

(12) **EUROPÄISCHE PATENTSCHRIFT**

(45) Veröffentlichungstag der Patentschrift:
**10.12.86**

(51) Int. Cl.⁴: **G 01 L 1/22**, G 01 G 3/14

(21) Anmeldenummer: **83201390.8**

(22) Anmeldetag: **29.09.83**

(54) **Kraftaufnehmer.**

(30) Priorität: **02.10.82 DE 3236532**

(43) Veröffentlichungstag der Anmeldung:
**18.04.84 Patentblatt 84/16**

(45) Bekanntmachung des Hinweises auf die Patenterteilung:
**10.12.86 Patentblatt 86/50**

(84) Benannte Vertragsstaaten:
**DE FR GB**

(56) Entgegenhaltungen:
**DE - A - 2 124 977**
**DE - A - 2 725 559**
**DE - B - 2 304 027**
**GB - A - 1 273 353**
**US - A - 3 376 537**
**US - A - 3 577 112**

**Fachbuch von T. Potma**
**"Dehnungsmessstreifenmesstechnik", Deutsche**
**Philips GmbH - Hamburg (DE), 1968, Seiten 16-20**

(73) Patentinhaber: **Philips Patentverwaltung GmbH,**
**Billstrasse 80, D-2000 Hamburg 28 (DE)**

(84) Benannte Vertragsstaaten: **DE**

(73) Patentinhaber: **N.V. Philips' Gloeilampenfabrieken,**
**Groenewoudseweg 1, NL-5621 BA Eindhoven (NL)**

(84) Benannte Vertragsstaaten: **FR GB**

(72) Erfinder: **Sander, Jörg, Am Hochsitz 8,**
**D-2000 Norderstedt (DE)**

(74) Vertreter: **Meier, Friedrich, Dipl.-Ing. et al, c/o PHILIPS**
**PATENTVERWALTUNG GMBH**
**Billstrasse 80 Postfach 10 51 49,**
**D-2000 Hamburg 28 (DE)**

## Beschreibung

Die Erfindung bezieht sich auf einen Kraftaufnehmer, insbesondere für Wägezellen, bestehend aus einem als Stauchkörper ausgebildeten Verformungskörper, mit dem separate Träger für Dehnungsmessstreifen verschweisst sind.

Aus der DE-A-27 25 559 sind Kraftaufnehmer für Wägezellen bekannt, die mit Grundlöcher versehene Stauchkörper verwenden. Auf die ebenen Grundflächen der präzise und somit nur mit grossem Aufwand herzustellenden Grundlöcher sind Dehnungsmessstreifen aufgeklebt. Bei hohen Temperaturen nimmt die Festigkeit der Klebeverbindung jedoch ab, so dass sich bei einer Verformung der Grundfläche eine Gleitbewegung der Dehnungsmessstreifen ergibt, und die Dehnungsmessstreifen nicht mehr in dem gleichen Masse verformt werden wie die Grundfläche. Da in diesem Fall die von der Grösse der eingeleiteten Kraft abhängige Verformung der Grundfläche von den Dehnungsmessstreifen nicht mehr vollständig erfasst werden kann, wird das Messergebnis verfälscht.

Aus dem Philips-Fachbuch «Dehnungsmessstreifenmesstechnik» von Dipl.-Ing. T. Potma, 1968, Deutsche Philips GmbH, Hamburg, Seiten 16 bis 20, ist es bekannt, Dehnungsmessstreifen auf als Metallfolien ausgebildeten separaten Trägern aufzubringen, die mit einem Messobjekt verschweissbar sind. Werden derartig ausgebildete Dehnungsmessstreifen auf Stauchkörpern angebracht, ergibt sich bei Einwirkung einer zu erfassenden und den Stauchkörper stauchenden Kraft eine undefinierbare Verformung der Metallfolie und der darauf angebrachten Dehnungsmessstreifen, so dass das von den Dehnungsmessstreifen gelieferte Messergebnis keine eindeutige Auskunft über die Grösse der erfassten Kraft gibt.

Aufgabe der vorliegenden Erfindung ist es, einen preisgünstig herstellbaren Kraftaufnehmer eingangs erwähnter Art zu schaffen, der auch bei hohen Temperaturen oder anderen, die Verbindung zwischen Messstreifen und Stauchkörper beeinträchtigenden Umgebungseinflüssen fehlerfrei arbeitet.

Diese Aufgabe wird bei einem Kraftaufnehmer eingangs genannter Art dadurch gelöst, dass der Stauchkörper mindestens eine quer zur Kraftrichtung liegende, durchgehende Bohrung aufweist, in der mindestens ein separater und scheibenförmig ausgebildeter Träger quer zur Achse der Bohrung und zentrisch eingeschweisst ist, wobei die Dehnungsmessstreifen in Schichttechnik, vorzugsweise in Dünnfilmtechnik auf den Träger aufgebracht sind.

Die Festigkeit von Schweissverbindungen ist weitgehend temperaturunabhängig und frei von Umwelteinflüssen, so dass der Kraftaufnehmer unter vielen unterschiedlichen Einflüssen einwandfrei arbeitet und insbesondere bei Verwendung scheibenförmiger Träger, die in einer Bohrung des Stauchkörpers zentrisch eingeschweisst sind, fehlerfreie Messergebnisse liefert. Weiterhin lassen sich scheibenförmige Träger z.B. durch Stanzen aus Blech oder durch Drehen einfach herstellen.

Werden Träger am Rand nur mit Teilen des Umfanges mit dem Stauchkörper verschweisst, verringert sich die beim Schweissen auftretende Temperaturbelastung der Träger. Da hierbei teure Schweissverfahren, wie z.B. das Mikroplasmaschweissen oder das Elektronenstrahlschweissen angewandt werden, führt eine Verkleinerung der Schweisszonen auch zu einer Verbilligung des Kraftaufnehmers.

Eine vorteilhafte Ausgestaltung der Erfindung ergibt sich dadurch, dass der Träger mit dem Stauchkörper in Richtung der eingeleiteten Kraft und quer dazu über stegartige Schweisszonen verbunden ist. Dadurch wird bei Einwirkung einer Kraft die Stauchung und die Ausbauchung des Stauchkörpers unverfälscht auf den Träger übertragen.

Anhand der Zeichnungen werden einige Ausführungsbeispiele der Erfindung beschrieben und es wird deren Wirkungsweise erläutert. Es zeigen

Fig. 1 eine Seitenansicht des Stauchkörpers,

Fig. 2 einen Schnitt längs II–II,

Fig. 3 einen vergrössert dargestellten Ausschnitt aus Fig. 2

Fig. 4 eine Seitenansicht des Stauchkörpers mit einem über Teile seines Umfanges eingeschweissten Träger.

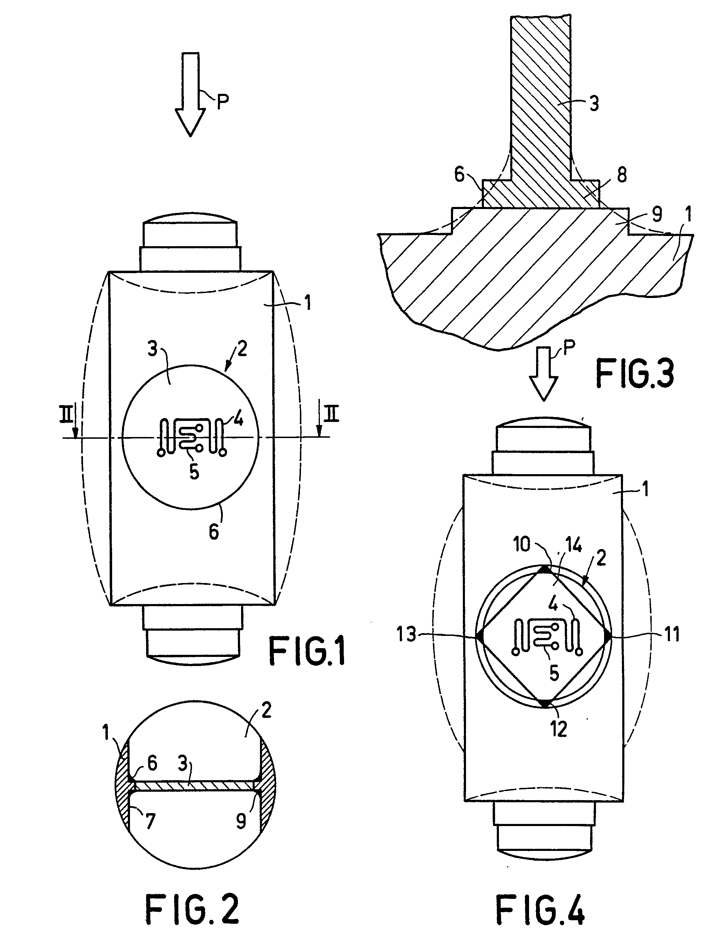

In Fig. 1 ist ein zylindrischer Stauchkörper 1 dargestellt, in dessen durchgehender Bohrung 2 ein scheibenförmiger, metallischer Träger 3 für Dehnungsmessstreifen 4 und 5 eingeschweisst ist. Die Schweissnaht 6 reicht über den gesamten Umfang des Trägers 3. Die Dehnungsmessstreifen 4 und 5 sind auf dem Träger 3 in Dünnfilmtechnik aufgebracht, d.h. aufgedampft oder aufgesputtert. Sie können aber auch in Dickschichttechnik auf dem Träger aufgebracht sein. Hierbei werden die Dehnungsmessstreifen als Widerstandspaste im Siebdruckverfahren auf den Träger 3 aufgedruckt und eingebrannt. Der Träger 3 kann mit dem Stauchkörper 1 durch Mikroplasmaschweissen, Elektronenstrahlschweissen oder durch Hartlöten verbunden sein.

Wirkt eine Kraft P auf den Stauchkörper 1, wird dieser in Richtung der Kraft P gestaucht und senkrecht dazu ausgebaucht. In Fig. 1 ist diese Formänderung gestrichelt – überhöht – angedeutet. Die Formänderung des Stauchkörpers 1 führt zu einer Stauchung des Trägers 3 in Richtung der Kraft P, und zu einer Dehnung des Trägers 3 senkrecht zur Kraft P. Die Stauchung des Trägers 3 verringert den Widerstand des Dehnungsmessstreifens 4, während die Dehnung des Trägers 3 den Widerstand des Dehnungsmessstreifens 5 vergrössert. Mit Hilfe einer Auswerteschaltung wird die Widerstandsänderung der Dehnungsmessstreifens 4 und 5 in ein der Kraft P proportionales elektrisches Messsignal umgewandelt.

Aus Fig. 2 ist ersichtlich, dass die Bohrung 2 im Stauchkörper 1 zentrisch einen verminderten Querschnitt aufweist, durch den sich an der Wandung 7 ein ringförmiger Absatz 9 ergibt, an dem der Träger 3 mit dem Stauchkörper 1 verschweisst ist.

In Fig. 3 ist ein Ausschnitt aus Fig. 2 vergrössert dargestellt. Über den Absatz 9 und den Wulst 8 ist der Stauchkörper 1 mit dem scheibenförmigen Träger 3 so verschweisst, dass sich ein etwa gleichmässiger Übergang vom Stauchkörper 1 auf den Träger 3 ergibt. Dieser Übergang kann beispielsweise die in Fig. 3 gestrichelt eingezeichnete Form haben.

In Fig. 4 ist der Träger 14 mit dem Stauchkörper 1 über die in Kraftrichtung liegenden Schweissnähte 10 und 12 und über die senkrecht zur Kraftrichtung liegenden Schweissnähte 11 und 13 verbunden. Über die Schweissnähte 10 und 12 wird die Stauchung und über die Schweissnähte 11 und 13 die gestrichelt eingezeichnete Ausbauchung des Stauchkörpers 1 auf den Träger 14 übertragen. Diese Verformungen des Trägers werden mit Hilfe der Dehnungsmessstreifen 4 und 5 und einer damit verbundenen Auswerteschaltung in elektrische Messignale umgewandelt.

Das Ausführungsbeispiel bezieht sich auf metallische Stauchkörper und metallische Träger. Der Stauchkörper kann aber auch aus teilelastischer Keramik oder aus Kunststoff entsprechend dem Anwendungsfall gefertigt sein. Der Träger besteht dann zweckmässig aus dem gleichen oder einem gleichartigen Material wie der Stauchkörper. Unter Verschweissen ist dabei eine unlösbare Verbindung zu verstehen, die vorzugsweise durch Verschmelzen der Materialien oder durch Legierungsbildung an den Verbindungteilen entsteht.

## Patentansprüche

1. Kraftaufnehmer, insbesondere für Wägezellen, bestehend aus einem als Stauchkörper (1) ausgebildeten Verformungskörper, mit dem separate Träger (3) für Dehnungsmessstreifen (4, 5) verschweisst sind, dadurch gekennzeichnet, dass der Stauchkörper (1) mindestens eine quer zur Kraftrichtung (P) liegende, durchgehende Bohrung (2) aufweist, in der mindestens ein separater und scheibenförmig ausgebildeter Träger (3) quer zur Achse der Bohrung (2) und zentrisch eingeschweisst ist, wobei die Dehnungsmessstreifen (4, 5) in Schichttechnik, vorzugsweise in Dünnfilmtechnik auf den Träger (3) aufgebracht sind.

2. Kraftaufnehmer nach Anspruch 1, dadurch gekennzeichnet, dass die Träger (3) aus Metall geformt sind und am Rand zumindest mit Teilen des Umfanges mit dem Stauchkörper verschweisst sind.

3. Kraftaufnehmer nach Anspruch 2, dadurch gekennzeichnet, dass der Träger (3) mit dem Stauchkörper (1) in Kraftrichtung (P) und quer dazu über stegartige Schweisszonen verbunden ist.

## Revendications

1. Transducteur de force destiné notamment à des cellules de pesée et constitué par un corps déformable, notamment un corps compressible (1) auquel sont soudés des supports séparés (3) pour des jauges de contrainte (4, 5), caractérisé en ce que le corps compressible (1) présente au moins un alésage continu (2) s'étendant perpendiculairement au sens (P) de la force et dans lequel au moins un support séparé (3) en forme de disque est soudé perpendiculairement à l'axe de l'alésage (2) et en position centrale, les jauges de contrainte (4, 5) étant appliquées sur le support (3) par la mise en œuvre d'une technique de dépôt de couches, de préférence d'une technique de dépôt de couches minces.

2. Transducteur de force selon la revendication 1, caractérisé en ce que les supports (3) sont métalliques et en ce que, au bord, ils sont soudés au corps compressible au moins par des parties de leur pourtour.

3. Transducteur de force selon la revendication 2, caractérisé en ce que le support (3) est réuni au corps compressible (1) par des zones de soudage en forme de barrette s'étendant dans le sens de la force (P) et perpendiculairement à ce sens.

## Claims

1. A load cell, in particular for weighing systems, which consists of a deformable member which is constructed as a compressively loaded member (1) whereto separate supports (3) for strain gauges (4, 5) are welded, characterized in that the member (1) is provided with at least one bottomless bore (2) which extends at right angles to the direction of force (P) and in which at least one separate, disc-shaped support (3) is centrically welded at right angles to the axis of the bore (2), the strain gauges (4, 5) being deposited on the supports (3) by means of a film technique, preferably the thinfilm technique.

2. A load cell as claimed in Claim 1, characterized in that the supports (3) are made of metal and are welded to the member at their edge by way of at least parts of their circumference.

3. A load cell as claimed in Claim 2, characterized in that the support (3) is connected to the member (1) by way of bridge-like welding zones that extend in the direction of force (P) as well as at right angles with respect thereto.

FIG.1

FIG.2

FIG.3

FIG.4